Europäisches Patentamt

European Patent Office

Office européen des brevets

(11) Publication number: **0 079 958**
**B1**

## EUROPEAN PATENT SPECIFICATION

(45) Date of publication of patent specification: **27.07.88**　　(51) Int. Cl.⁴: **H 01 J 40/14**

(21) Application number: **82902145.0**

(22) Date of filing: **28.05.82**

(86) International application number:
**PCT/US82/00738**

(87) International publication number:
**WO 82/04352 09.12.82 Gazette 82/29**

(54) **HIGH RESOLUTION OPTICAL-ADDRESSING APPARATUS.**

(30) Priority: **01.06.81 US 268977**

(43) Date of publication of application:
**01.06.83 Bulletin 83/22**

(45) Publication of the grant of the patent:
**27.07.88 Bulletin 88/30**

(84) Designated Contracting States:
**DE FR GB NL**

(56) References cited:
**US-A- 355 987**
**US-A-3 593 318**
**US-A-3 624 817**
**US-A-3 743 379**
**US-A-3 831 035**
**US-A-3 879 700**
**US-A-4 156 555**
**US-A-4 162 121**

(73) Proprietor: **EASTMAN KODAK COMPANY**
**343 State Street**
**Rochester New York 14650 (US)**

(72) Inventor: **MIR, José Manuel**
**307 English Road**
**Rochester, NY 14616 (US)**

(74) Representative: **Blickle, K. Werner, Dipl.-Ing.**
**et al**
**KODAK AKTIENGESELLSCHAFT Postfach 369**
**D-7000 Stuttgart-Wangen 60 (DE)**

Courier Press, Leamington Spa, England.

## Description

The present invention relates to the field of electronic imaging and more particularly to improvements in apparatus for optically addressing (i.e. exposing with light) each of a plurality of discrete picture elements (pixels) which collectively define either (a) an image to be formed by the addressing light (e.g. by intensity-modulating the addressing light on a pixel-by-pixel basis) or (b) an image to be scanned by the addressing light to produce, in cooperation with a photodetector, an electrical signal representative of the scanned image information.

To form (or scan) optical images of even moderate detail using electronic imaging techniques, a relatively large number of pixels per image line must be optically addressed. The number of pixels per line increases in accordance with the resolution requirements of the imaging (or scanning) application, becoming, for example, as large as 100 pixels per centimeter for high resolution continuous tone imaging.

Prior art devices for optically addressing the pixels of an image line are generally of two types. One type is that which addresses such pixels in a serial manner, i.e., one at a time, one after the other. Such a device may comprise, for example, a laser scanner in which a single laser beam is swept across each pixel in an image line. The disadvantage of this type of device is that it is relatively slow in producing (or scanning) images because of its serial nature of addressing pixels. The other type of optical addressing device is that which addresses all picture elements in an image line in parallel (i.e. simultaneously). Such apparatus may comprise, for example, a light valve array for producing a plurality of light beams, one for each pixel in an image line. (See, e.g., the light valve apparatus disclosed in U.S. Patent No. 4,229,095). While conceptually much faster than the serial-type of addressing devices, the parallel-type of device is considerably more complex and costly, particularly in the case of the above-mentioned high resolution imaging.

The object of this invention, therefore, is to provide a relatively simple apparatus for optically addressing the pixels of a high resolution image at high speed. The optical addressing apparatus of the invention basically comprises a linear array of lens, each lens being adapted to focus incident light from a plurality of different predetermined directions onto a different pixel of an associated multi-pixel address zone, and light control means for directing light uniformly onto each lens of the array sequentially from such different predetermined directions. The apparatus of the invention is particularly useful with a light valve array to form images, such light valve array functioning to intensity-modulate with image information the light used to optically address each pixel of an image to be formed.

The subsequent detailed description of preferred embodiments of the invention is made with reference to the attached drawings wherein:

Figures 1 and 2 are schematic illustrations of prior art light valve imaging apparatus;

Figure 3 is a schematic and perspective view illustrating a preferred embodiment of the optical-addressing apparatus of the invention as incorporated in electronic imaging apparatus;

Figure 4 is a diagrammatic top view of an apparatus similar to that shown in Figure 3;

Figure 5 is an enlarged diagram of a portion of the optical-addressing apparatus shown in Figures 3 and 4;

Figures 6a and 7 are respectively plan and sectional views of a portion of the light valve array shown in Figures 3 and 4;

Figure 6b is a plan view of an alternative light valve array useful with the present invention;

Figure 8 is a schematic perspective view of a portion of a scanning apparatus embodying the present invention; and

Figure 9 is a schematic illustration of a multiple station color imaging apparatus embodying the present invention.

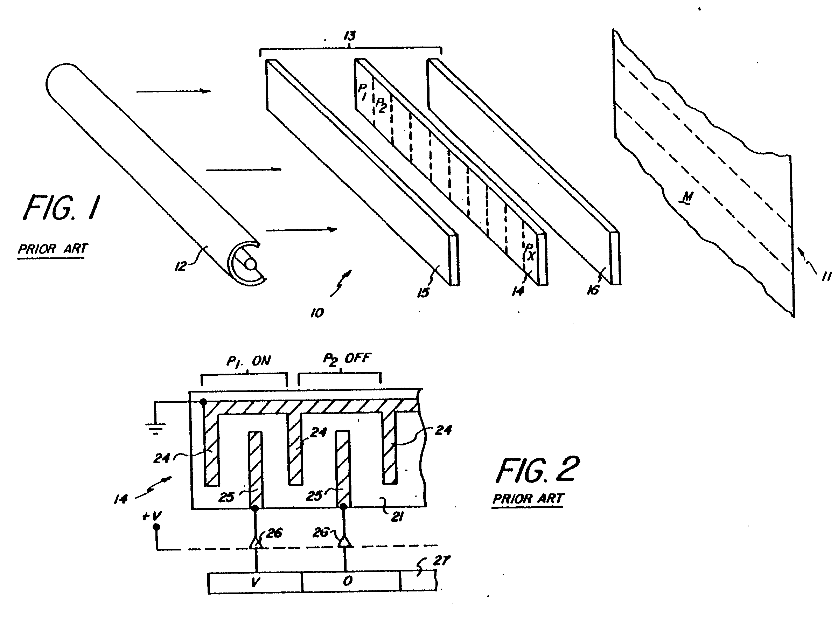

Referring first briefly to Figures 1 and 2, there is illustrated schematically a typical prior art light valve imgaing apparatus 10. In use, as light-sensitive recording medium M is moved past exposure station 11, light from source 12 is electrooptically modulated in an imagewise manner by light valve array 13. The array 13 comprises an electrooptic panel 14 (e.g. PLZT) sandwiched between crossed polarizers 15 and 16. The panel 14 comprises a plurality of separately-addressable light-modulating valve portions $P'_1$, $P'_2$...$P'_x$, one for each pixel to be addressed at exposure station 11. As shown in Figure 2, the discrete light-modulating portions of the panel are defined by grounding and addressing electrodes 24 and 25 respectively. Address means, e.g. shift register 27, provides image signals to high voltage switches 26, thereby selectively applying high voltage +V to the addressing electrodes in accordance with image information input to the shift register. Thus each pixel of the exposure zone requires its own electrode and switch structure.

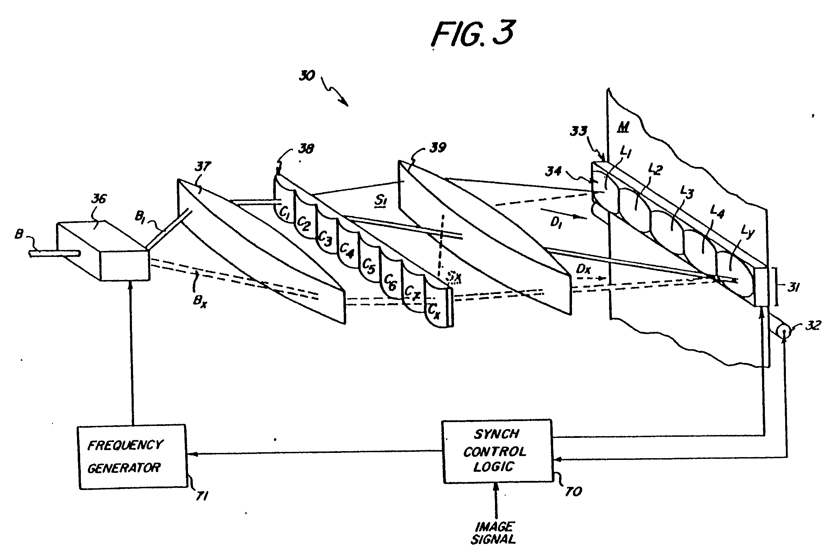

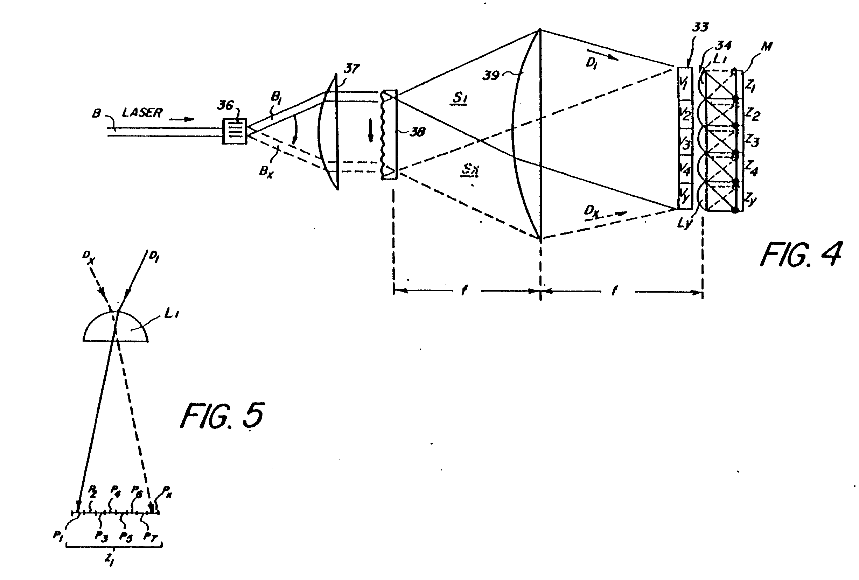

Referring now to Figures 3 and 4, there is shown a preferred embodiment of the present invention embodied in an electronic imaging apparatus. The electronic imaging apparatus 30 has a linear exposure region 31 and drive means 32 for transporting a recording medium M therepast. In general, the electronic imaging apparatus 30 comprises a low-resolution linear light valve array 33 and apparatus for optically addressing high-resolution pixels of the linear exposure region with light beams of correspondingly high resolution. The optical-addressing apparatus, in general, includes: (1) a linear lens array 34 (which can be positioned in front of the light valve array, as shown in Figure 3, or behind such array as shown in Figure 4) comprising a plurality of discrete spherical lens elements $L_1$, $L_2$, $L_3$, $L_4$, $L_y$, each adapted to focus incident collimated light, from one of a plurality of discrete incidence directions $D_1$—$D_x$, onto respectively different pix-

els within an associated multi-pixel zone $Z_1, Z_2, Z_3, Z_4$ or $Z_y$, which form the linear exposure region 31; and (2) electrooptic means for directing light onto lens array 34 sequentially from a plurality of different incidence directions $D_1 \ldots D_x$. In the preferred embodiment shown in Figures 3 and 4, the means for so directing light includes acoustooptic deflector 36, collimating lens 37, a linear array 38 of cylindrical lenticular elements $C_1$—$C_x$ and cylindrical or spherical collimating lens 39.

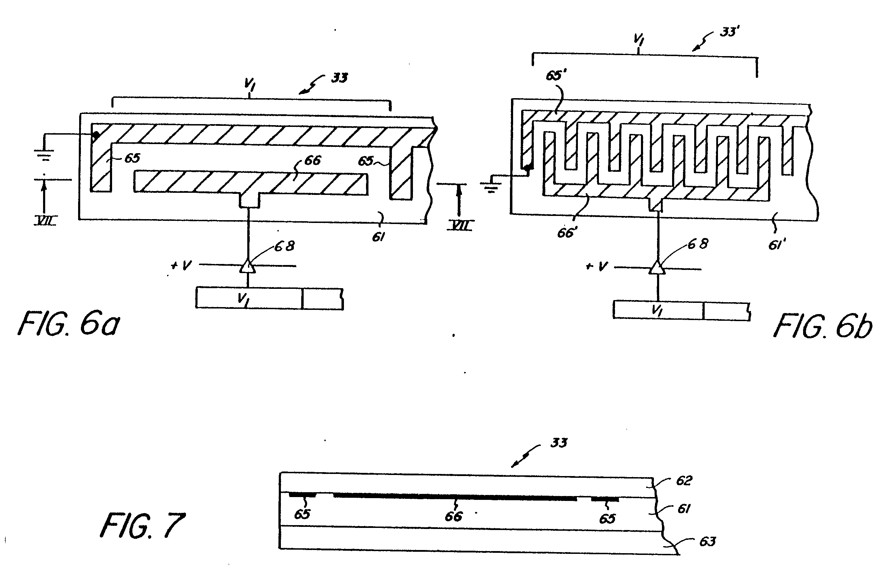

The operation of the optical-addressing apparatus can be better understood by referring to Figure 5 together with Figures 3 and 4. Thus, deflector 36 is adapted to sequentially deflect an incoming circular light beam B, e.g. from a laser (not shown) along one of the directions $B_1$—$B_x$, each aimed at respective cylindrical elements $C_1$—$C_x$ of array 38. In the illustrated embodiment, cylindrical lens 37 is provided to direct the beams $B_1$—$B_x$ generally normal to the plane of array 38. As shown in Figures 3 and 4, each of cylindrical elements $C_1$—$C_x$ refracts its respective beam $B_1$—$B_x$ into a diverging sheet beam $S_1$—$S_x$ directed toward collimating lens 39 from a different direction. Collimating lens 39 refracts the expanded light from the cylindrical elements $C_1$—$C_x$ and directs it toward the lens array 34. More specifically, lens 39, which can be, e.g., a spherical or cylindrical lens, is located one focal length f from array 38 and one focal length from array 34. Thus it will be seen that the array 34 is sequentially illuminated with a plurality of collimated sheet beams, each emanating from a different direction in accordance with the initial deflection by deflector 36.

The advantageous result from this optical configuration and operational mode is that each lens element, $L_1$—$L_y$, focuses incident light on a different pixel, $P_1$—$P_x$, within a multi-pixel zone Z for each of the different directions of incident collimated light. Thus during the sequence wherein beam B is deflected between $B_1$—$B_x$, array 34 is sequentially illuminated by collimated light from directions $D_1$ (solid line path in Figures 3—5) through $D_x$ (dotted line path in Figures 3—5). This causes sequential optical addressing of each of the pixels in the multi-pixel zones $Z_1$—$Z_y$, all of such zones being addressed simultaneously.

More specifically, when collimated light from direction $D_1$ (see Figure 5) is incident on a lens array element, e.g. $L_1$, light is focused by the lens elements to a pixel $P_1$ within the multispot zone $Z_1$. A similar result is occurring concurrently at each of the other zones $Z_2$—$Z_y$ via lens $L_2$—$L_y$, respectively. As deflector 36 shifts beam B to position $B_2$ (at element $C_2$), pixel $P_2$ of zone $Z_1$ is illuminated by lens $L_1$ (as are pixels $P_2$ of all other zones illuminated by lenses $L_2$—$L_y$). It will be appreciated, therefore, that in the complete line exposure sequence, i.e. a deflection of from B from $B_1$—$B_x$, a total of x · y pixels of the exposure region will be illuminated, where, in the illustrated embodiment, x is the number of discrete cylindrical elements in lens array 38, and y is the number of discrete lenses in array 34.

Now consider how the high-resolution optical-addressing device just described can be used in cooperation with low-resolution light valve array 33 to provide improved electronic imaging. One preferred configuration for the array 33 is illustrated in Figures 6a and 7. As shown, array 33 comprises an electro-optic panel 61 (e.g. PLZT material) sandwiched between crossed polarizers 62, 63. (An alternative electrode configuration is shown in Figure 6b.) Grounded electrodes 65 define a plurality of discrete light-modulating portions $V_1$—$V_y$ which are each of low resolution, relative to pixels $P_1$—$P_x$, and which are each independently addressable via activating electrodes 66.

As shown best in Figure 4, the low-resolution light valve array 33 is located with respect to lens array 34 so that each modulation portion $V_1$—$V_y$ is optically aligned to control light of corresponding lens elements $L_1$—$L_y$. Thus modulating portions $V_1$—$V_y$ respectively regulate the light for multispot zones $Z_1$—$Z_y$. As shown, each modulating portion $V_1$—$V_y$ has a single high-voltage switch 68 that is addressed by a shift register (not shown) to control its energization with voltage +V. One further point should be explained at this stage. It will be noted that in Figure 3 light valve array 33 is behind lens array 34 and the opposite is true in Figure 4. The Figure 4 arrangement is preferred to maximize the operative area of the light valve, which enhances uniformity.

One preferred mode of electronic imaging with apparatus 30 shown in Figure 3, under the control of synchronization and control logic 70, is as follows. Synchronization and control logic 70 includes timing circuitry which regulates the movement of recording medium M past the exposure station to define line exposure periods for successive lines of an image to be recorded on recording medium M. During each such line exposure period, logic 70 actuates a plurality of sequential frequency shifts of frequency generator 71 to respectively effect deflection of beam B through each of its $B_1$—$B_x$ positions. This results in corresponding sequential exposures of pixels $P_1$—$P_x$ of each of multispot exposure zones $Z_1$—$Z_y$, during separate subperiods of the line exposure period. That is, pixels $P_1$ of all zones ($P_1$ set) are optically addressed concurrently, pixels $P_2$ of all zones ($P_2$ set) are optically addressed concurrently, etc.

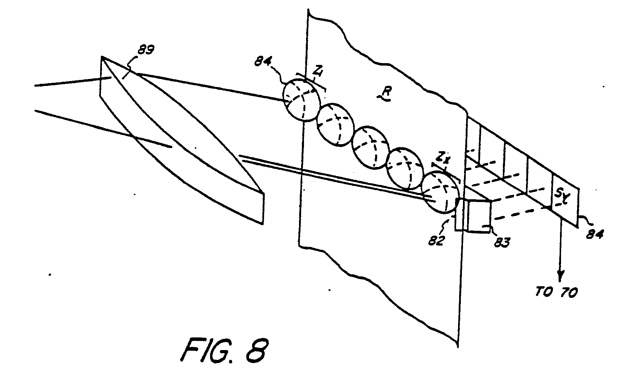

During each such sub-exposure period, the individual light valves $V_1$—$V_y$ of light valve array 33 are addressed with appropriate off-on information for the respective pixel sets ($P_1$ set through $P_x$ set), optically addressed during that sub-period. For example if pixel $P_3$ of zone $Z_1$ is to be exposed for a particular image line, the modulating portion $V_1$ will be energized during the $B_3$ sub-period of line exposure. It will be appreciated that the format of the image signal provided to array 33 is tailored in accordance with the number of lens element $L_y$ and the number of line sub-periods $B_x$. This can be accomplished by appropriate time delay and storage circuitry in logic unit 70, or more directly by scanning apparatus such as shown in Figure 8. Also, gray scale can be obtained by activating pulse length modulation or modulation of the voltage amplitude of the activating pulse as described in more detail in U.S. Patent 4,229,095.

The optical-addressing device of the electronic scanning apparatus 80 shown in Figure 8 is identical to that shown in Figures 3 and 4. In fact, if the scanning apparatus 80 is used in cooperation with imaging apparatus 30, elements such as deflector 36 can be used commonly. Thus, during successive sub-periods of beam deflection $B_1$—$B_x$, collimated light is directed to lens array 84 at different directions from collimating lens 89. As a record member R, which is to be scanned, is moved past scan region 82, pixels $P_1$—$P_x$ of zones $Z_1$—$Z_y$ of the scan region are illuminated in sets as described above. In the illustrated embodiment the record member R is a transparency; thus opticaladdressing light passes the record member in accord with information thereon. A lens array 83, e.g. of gradient index optical fibers, directs light from zones $Z_1$—$Z_y$ respective to separate photosensor elements, $S_1$—$S_y$, of a low-resolution scan detector array 84. Thus it will be appreciated that the signals from elements $S_1$—$S_y$ of detector array 84 can be transmitted via logic 70 to light valve array 33 to control exposure of recording medium M. Alternatively such signals can be transmitted to a storage device for future processing or access.

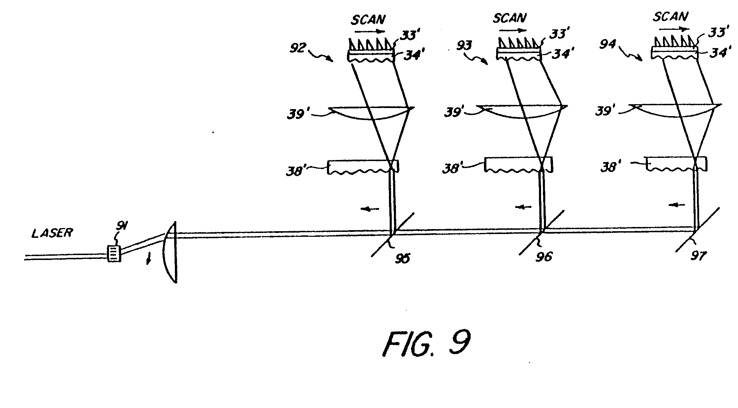

One skilled in the art will appreciate that color imaging can be effected in accordance with the present invention by modifying the Figure 1 apparatus to provide three colinear different color laser beams deflected by an acoustooptic means and by providing properly timed actuation of light valve array 33 during three successive color line exposure periods. In an alternative color imaging embodiment shown schematically in Figure 9, three separate exposing stations (each containing elements 38', 39', 34' and 33') are located to discharge separate portions of a charged photoconductor web in accordance with the different color separation information for a particular image to be reproduced. Upon development of each such image with different color toner and registered transfer of the different images to a single transfer sheet, a multicolor image is produced. As shown in Figure 9, such an embodiment comprises a single deflector 91 and separate exposure stations 92, 93, 94, each receiving light from deflector 91 via beam splitters 95, 96 and mirror 97 respectively.

Also, it should be understood that there are various alternative optical configurations for practice of the present invention. For example, in some applications it may be useful to construct array 38 as an array of higher lenslet periodicity than the number of illuminating directions, with the laser beam sequentially incident on different multi-lenslet groups (i.e. lenticule means). Further, beam scanning means other than acoustooptic deflectors, e.g. galvanometers or rotating polygon reflectors are useful for practice of the present invention.

From the foregoing disclosure, it will be appreciated that the optical-addressing apparatus of the invention is capable of addressing image pixels at a rate which is considerably faster than conventional laser printers and scanners, since it addresses a multitude of pixels in an image line simultaneously, rather than one at a time. Further, since each lens in array 34 optically addresses a plurality of pixels in multi-pixel address zone, the apparatus of the invention is considerably simpler in construction as compared with those prior art devices which produce a multitude of optical-addressing light beams, one for each pixel in an image line.

**Claims**

1. Apparatus for optically addressing a plurality of discrete pixels located at respective positions across a linear, optical-address region, said apparatus being characterized by:

(a) a linear lens array (34) including a plurality of discrete lens elements ($L_1$—$L_y$), each adapted to focus incident light, from a plurality of different directions ($D_1$—$D_x$), onto respectively different pixels ($P_1$—$P_x$) of an associated, multi-pixel address zone (Z) within said optical-address region; and

(b) light control means (36, 37, 38, 39) for directing light uniformly onto said linear lens array sequentially from different ones of the said plurality of different directions.

2. The apparatus defined in Claim 1 characterized in that said control means comprises: (i) means (36) for sequentially deflecting a light beam to different positions along a linear path, (ii) a linear lenticule array (38) including a plurality of discrete lens elements ($C_1$—$C_x$) located at respective positions along said beam path, each of said elements being adapted to refract such light beam into a sheet beam ($S_1$—$S_x$) and (iii) collimating lens means (39), located between said lenticule array and said linear lens array, for collimating and directing sheet beams from said lenticule array onto said linear array.

3. The apparatus defined in Claim 2 characterized in that said deflecting means includes an acoustooptic deflector (36) adapted to deflect light to "x" different positions along said path, in that said lenticule array comprises "x" lenticule means, and in that said lens array comprises "y" spherical lenslets, whereby x · y of said pixels will be optically addressed in "x" sets by deflection of said light beam to all of said "x" positions.

4. An electronic imaging apparatus having means for transporting a light-sensitive image medium past a linear exposure region, and electrooptic means for optically addressing with light of varying intensity each of a plurality of pixels which collectively define an image to be formed on such medium, characterized in that said optical addressing means comprises:

(a) a linear lens array (34) including a plurality of discrete lens elements ($L_1$—$L_y$), each adapted to focus incident light, from a plurality of different incidence directions ($D_1$—$D_x$), onto respectively different pixels ($P_1$—$P_x$) of an associated, multi-pixel exposure zone (Z) within said linear exposure region;

(b) light control means (36, 37, 38, 39) for directing light uniformly onto said linear lens array sequentially from different ones of the said plurality of different incidence directions; and

(c) a linear light valve array (33) having a plurality of discrete light-modulating portions ($V_1$—$V_y$) which are each independently addressable electrically to control the passage of light and optically aligned with a respective one of said discrete lens elements.

5. The apparatus defined in Claim 4 characterized in that said light control means comprises: (i) acoustooptic means (36, 71) for sequentially deflecting a light beam to different positions along a linear path, (ii) a linear lenticule array (38) including a plurality of discrete lenticules ($C_1$—$C_x$) located at respective positions along said beam path, each of said lenticules being adapted to refract such light beam into a sheet beam ($S_1$—$S_x$) and (iii) collimating lens means (39), located between said lenticule array and said linear lens array, for collimating and directing sheet beams from said lenticule array onto said linear lens array.

6. Apparatus for optically scanning the individual pixels of successive image lines of a record member at a scanning region past which such member is transported, said apparatus comprising:

(a) a linear lens array (34) including a plurality of discrete lens elements ($L_1$—$L_y$) each adapted to focus incident light, from a plurality of different incidence directions ($D_1$—$D_x$), onto respectively different pixels ($P_1$—$P_x$) of an associated, multi-pixel scan zone (Z) within said scanning region;

(b) light control means (36—39) for directing light uniformly onto said linear lens array sequentially from different ones of the said plurality of different incidence directions; and

(c) a linear array (84) of discrete photosensor elements each located to receive light from a respective lens element of said lens array after reflection or transmission by the pixels of a record member image line at said scanning region.

7. The apparatus defined in Claim 6 characterized in that said light control means comprises: (i) acoustooptic means (36, 71) for sequentially deflecting a light beam to different positions along a linear path, (ii) a linear lenticule array (38) including a plurality of discrete lenticules ($C_1$—$C_x$) located at respective positions along said beam path, each of said lenticules being adapted to refract such light beam into a sheet beam ($S_1$—$S_x$) and (iii) collimating lens means (39), located between said lenticule array and said linear lens array, for collimating and directing sheet beams from said lenticule array onto said linear lens array.

**Patentansprüche**

1. Vorrichtung zum optischen Adressieren einer Vielzahl diskreter Bildelemente (Pixels), die in entsprechenden Positionen längs eines zeilenförmigen optischen Adressierungsbereichs angeordnet sind, gekennzeichnet durch

a) eine zeilenförmige Linsenanordnung (34) mit einer Vielzahl diskreter Linsenelemente ($L_1$—$L_y$), von denen jedes Linsenelement Licht, das aus einer Vielzahl von unterschiedlichen Richtungen ($D_1$—$D_x$) einfällt, auf jeweils unterschiedliche Bildelemente ($P_1$—$P_x$) einer zugeordneten, aus mehreren Bildelementen bestehenden Adressierungszone (Z) innerhalb des optischen Adressierungsbereichs fokussiert, und

b) eine Lichtsteuereinrichtung (36, 37, 38, 39), mit der Licht aus verschiedenen der Vielzahl unterschiedlicher Richtungen nacheinander gleichmäßig auf die zeilenförmige Linsenanordnung gerichtet wird.

2. Vorrichtung nach Anspruch 1, gekennzeichnet durch eine Steuereinrichtung mit (i) Mitteln (36) zum Ablenken eines Lichtstrahls nacheinander in unterschiedliche Positionen längs einer zeilenförmigen Bahn, (ii) einer zeilenförmigen Rasterlinsenanordnung (38) mit einer Vielzahl von in zugeordneten Positionen längs der zeilenförmigen Bahn angeordneten diskreten Linsenelementen ($C_1$—$C_x$), von denen jedes den Lichtstrahl zu einem in der Ebene aufgeweiteten Strahl ($S_1$—$S_x$) bricht, sowie (iii) einer zwischen der Rasterlinsenanordnung und der zeilenförmigen Linsenanordnung befindlichen Kollimatorlinseneinrichtung (39), mit der die von der Rasterlinsenanordnung in der Ebene aufgeweiteten Strahlen kollimiert und auf die zeilenförmige Linsenanordnung gelenkt werden.

3. Vorrichtung nach Anspruch 2, dadurch gekennzeichnet, daß die Ablenkmittel ein akustooptisches Ablenkelement (36) aufweisen, das Licht in "x" unterschiedliche Positionen auf der Bahn ablenkt, daß die Rasterlinsenanordnung "x" Rasterlinsenelemente umfaßt und daß die Linsenanordnung "y" kleinste sphärische Linsenkomponenten umfaßt, derart, daß x · y Bildelemente in "x" Sätzen durch Ablenkung des Lichtstrahls zu allen der "x" Positionen optisch beaufschlagt werden.

4. Elektronische Abbildungsvorrichtung mit einer Einrichtung zum Transport eines lichtempfindlichen Abbildungsmediums längs eines zeilenförmigen Belichtungsbereichs und mit einer elektrooptischen Einrichtung zum optischen Adressieren jedes einer Vielzahl von Bildelementen mit Licht unterschiedlicher Intensität, wobei die Bildelemente in ihrer Gesamtheit ein auf dem Medium zu erzeugendes Bild ergeben, dadurch gekennzeichnet, daß die Einrichtung zum optischen Adressieren der Bildelemente folgendes umfaßt:

a) eine zeilenförmige Linsenanordnung (34) mit einer Vielzahl diskreter Linsenelemente ($L_1$—$L_y$), von denen jedes Linsenelement Licht, das aus einer Vielzahl unterschiedlicher Richtungen

(D₁—Dₓ) einfällt, auf entsprechende unterschiedliche Bildelemente (P₁—Pₓ) einer zugeordneten, aus mehreren Bildelementen bestehenden Belichtungszone (Z) innerhalb des zeilenförmigen Belichtungsbereichs fokussiert,

b) eine Lichtsteuereinrichtung (36, 37, 38, 39), um Licht aus verschiedenen der unterschiedlichen Lichteinfallsrichtungen nacheinander gleichmäßig auf die zeilenförmige Linsenanordnung zu lenken, und

c) eine zeilenförmige Lichtventilanordnung (33) mit einer Vielzahl diskreter lichtmodulierender Bereiche (V₁—Vᵧ), die jeweils unabhängig voneinander elektrisch so beaufschlagbar sind, daß sie die Lichtübertragung steuern, und die jeweils mit entsprechenden diskreten Linsenelementen optisch ausgerichtet sind.

5. Vorrichtung nach Anspruch 4, dadurch gekennzeichnet, daß die Lichtsteuereinrichtung folgendes umfaßt: (i) ein akustooptisches Element (36, 71), um einen Lichtstrahl nacheinander in verschiedene Positionen längs einer zeilenförmigen Bahn abzulenken, (ii) eine zeilenförmige Rasterlinsenanordnung (38) mit einer Vielzahl von diskreten Rasterlinsenelementen (C₁—Cₓ), die in entsprechenden Positionen längs dieser Bahn des Lichtstrahls angeordnet sind, und von denen jedes den Lichtstrahl zu einem in der Ebene aufgeweiteten Strahl (S₁—Sₓ) bricht, und (iii) eine Kollimatorlinseneinrichtung (39), die zwischen der Rasterlinsenanordnung und der zeilenförmigen Linsenanordnung liegend die von der Rasterlinsenanordnung in der Ebene aufgeweiteten Strahlen kollimiert und zu der zeilenförmigen Linsenanordnung lenkt.

6. Vorrichtung zum optischen Abtasten der einzelnen Bildelemente aufeinanderfolgender Bildzeilen eines Aufzeichnungsmittels in einem Abtastbereich, an dem das Aufzeichnungsmittel vorbeitransportiert wird, mit

a) einer zeilenförmigen Linsenanordnung (34) mit einer Vielzahl diskreter Linsenelemente (L₁—Lᵧ), von denen jedes Linsenelement Licht, das aus mehreren unterschiedlichen Richtungen (D₁—Dₓ) einfällt, auf jeweils unterschiedliche Bildelemente (P₁—Pₓ) einer zugeordneten, mehrere Bildelemente umfassenden Abtastzone (Z) innerhalb des Abtastbereichs fokussiert,

b) einer Lichtsteuereinrichtung (36—39), um Licht aus verschiedenen Einfallsrichtungen nacheinander gleichmäßig auf die zeilenförmige Linsenanordnung zu lenke, und

c) einer zeilenförmigen Anordnung (84) aus diskreten Fotosensorelemente, die jeweils so angeordnet sind, daß sie Licht von einem entsprechenden Linsenelement der Linsenanordnung empfangen, nachdem von den Bildelementen eine Bildzeile des Aufzeichnungsmittels im Abtastbereich reflektiert oder übertragen worden ist.

7. Vorrichtung nach Anspruch 6, dadurch gekennzeichnet, daß die Lichtsteuereinrichtung folgendes umfaßt: (i) eine akusto-optische Einrichtung (36, 71), um einen Lichtstrahl nacheinander in verschiedene Positionen längs einer zeilenförmigen Bahn zu lenken, (ii) eine zeilenförmiges Rasterlinsenanordnung (38) mit einer Vielzahl diskreter Rasterlinsenelemente (C₁—Cₓ), die in entsprechenden Positionen längs der Bahn des Lichtstrahls angeordnet sind und von denen jedes den Lichtstrahl zu einem in der Ebene aufgeweiteten Strahl (S₁—Sₓ) bricht, und (iii) eine Kollimatorlinseneinrichtung (39), die zwischen der Rasterlinsenanordnung und der zeilenförmigen Linsenanordnung liegend die von der Rasterlinsenanordnung in der Ebene aufgeweiteten Strahlen kollimiert und auf die zeilenförmige Linsenanordnung lenkt.

## Revendications

1. Dispositif d'adressage optique d'une pluralité de pixels discrets situés en des positions respectives d'une ligne transversale d'une zone d'adressage optique, dispositif caractérisé en ce qu'il comprend:

a) un ensemble linéaire de lentilles (34) muni d'une pluralité de lentilles (L₁—Lᵧ) individuelles, chacune étant susceptible de focaliser, la lumière incidente suivant l'une des orientations multiples (D₁—Dₓ), sur des pixels distincts respectifs (P₁—Pₓ) d'une zone (Z) d'adressage à pixels multiples associée, localisée à l'intérieur de la zone d'adressage optique; et

b) des moyens (36, 37, 38, 39) pour éclairer uniformément ledit ensemble linéaire en traitant séquentiellement chacune des orientations multiples.

2. Dispositif conforme à la revendication 1, caractérisé en ce que les moyens d'éclairage comprennent:

a) un organe (36) pour dévier séquentiellement un faisceau lumineux suivant différentes positions alignées,

b) un ensemble linéaire lenticulaire (38) muni de plusieurs lentilles individuelles (C₁—Cₓ) situées auxdites différentes positions, chacune des lentilles individuelles permettant de réfracter la lumière suivant un faisceau aplati et,

c) une lentille de collimation (39) située entre l'ensemble linéaire lenticulaire et l'ensemble linéaire de lentilles, pour collimater et diriger le faisceau aplati issu de l'ensemble lenticulaire sur l'ensemble de lentilles.

3. Dispositif conforme à la revendication 2, caractérisé en ce que l'organe de déviation comprend une cellule acousto-optique (36) susceptible de dévier le faisceau incident suivant "x" positions différentes, en ce que l'ensemble linéaire lenticulaire comprend "x" éléments lenticulaires individuels, et en ce que l'ensemble linéaire de lentilles comprend "y" lentilles sphériques, de manière à adresser optiquement "x-y" pixels réunis en jeux distincts par déviation du faisceau suivant lesdites "x" positions.

4. Ensemble électronique pour la formation d'images présentant des moyens pour déplacer un support image sensible à la lumière devant un poste d'exposition linéaire et des moyens électro-optiques pour adresser optiquement avec un éclairement variable une pluralité de pixels qui définissent tous ensemble une image à former sur ledit support, ensemble caractérisé en ce que les moyens électro-optiques comprennent:

a) un ensemble linéaire de lentilles (34) muni d'une pluralité de lentilles ($L_1$—$L_y$) individuelles, chacune étant susceptible de focaliser, la lumière incidente suivant l'une des orientations multiples ($D_1$—$D_x$), sur des pixels distincts respectifs ($P_1$—$P_x$) d'une zone (Z) d'adressage à pixels multiples associée, localisée à l'intérieur de la zone d'adressage optique; et

b) des moyens (36, 37, 38, 39) pour éclairer uniformément ledit ensemble linéaire en traitant séquentiellement chacune des orientations multiples.

c) un modulateur de lumière linéaire (33) présentant plusieurs zones discrètes ($V_1$—$V_y$) modulant la lumière, électriquement adressable de manière indépendante pour commander la quantité de lumière traversant ladite zone, chaque zone étant alignée optiquement avec l'une desdites lentilles individuelles.

5. Ensemble conforme à la revendication 4, caractérisé en ce que les moyens d'éclairage comprennent:

a) un organe (36) pour dévier séquentiellement un faisceau lumineux suivant différentes positions alignées,

b) un ensemble linéaire lenticulaire (38) muni de plusieurs lentilles individuelles ($C_1$—$C_x$) situées auxdites différentes positions, chacune des lentilles individuelles permettant de réfracter la lumière suivant un faisceau aplati et,

c) une lentille de collimation (39) située entre l'ensemble linéaire lenticulaire et l'ensemble linéaire de lentilles, pour collimater et diriger le faisceau aplati issu de l'ensemble lenticulaire sur l'ensemble de lentilles.

6. Agencement pour le balayage optique des pixels individuels des lignes image successives d'un organe récepteur se déplaçant devant un poste de balayage, agencement comprenant:

a) un ensemble linéaire de lentilles (34) muni d'une pluralité de lentilles ($L_1$—$L_y$) individuelles, chacune·étant susceptible de focaliser, la lumière incidente suivant l'une des orientations multiples ($D_1$—$D_x$), sur des pixels distincts respectifs ($P_1$—$P_x$) d'une zone (Z) d'adressage à pixels multiples associée, localisée à l'intérieur de la zone d'adressage optique; et

b) des moyens (36, 37, 38, 39) pour éclairer uniformément ledit ensemble linéaire en traitant séquentiellement chacune des orientations multiples.

c) un ensemble linéaire (84) d'éléments photosensibles discrets dont chacun reçoit la lumière issue d'une lentille respective dudit ensemble linéaire de lentilles après réflexion ou transmission par les pixels d'une ligne image d'un organe d'enregistrement se déplaçant devant le poste de balayage.

7. Agencement conforme à la revendication 6, caractérisé en ce que les moyens d'éclairage comprennent:

a) un organe (36) pour dévier séquentiellement un faisceau lumineux suivant différentes positions alignées,

b) un ensemble linéaire lenticulaire (38) muni de plusieurs lentilles individuelles ($C_1$—$C_x$) situées auxdites différentes positions, chacune des lentilles individuelles permettant de réfracter la lumière suivant un faisceau aplati et,

c) une lentille de collimation (39) située entre l'ensemble linéaire lenticulaire et l'ensemble linéaire de lentilles, pour collimater et diriger le faisceau aplati issu de l'ensemble lenticulaire sur l'ensemble de lentilles.

FIG. 1

PRIOR ART

13

12

10

15   14   16

11

M

P1   P2   Px

FIG. 2

PRIOR ART

P1 ON   P2 OFF

24   24   24

25   25   21

26   26

+V   14   27

V   0

0 079 958

FIG.3

FIG. 4

FIG. 5

0 079 958

FIG. 6a

FIG. 6b

FIG. 7

FIG. 8

FIG. 9